# EUROPEAN PATENT APPLICATION

(11) **EP 2 439 244 A1**
(43) Date of publication of application: **11.04.2012**
(21) Application number: 10783148.9
(22) Date of filing: 02.06.2010
(51) Int. Cl.: C09D 11/00, B41J 2/01, B41M 5/00

(54) **ACTINIC-ENERGY-RAY-CURABLE INK COMPOSITION FOR INK-JET RECORDING**

(30) Priority: 05.06.2009 JP 2009135715
(71) Applicant: DNP Fine Chemicals Co., Ltd., Kanagawa 226-0022 (JP)
(72) Inventor: ISHIMA, Yukiko, Yokohama-shi Kanagawa 226-0022 (JP)
(74) Representative: HOFFMANN EITLE
(86) International application number: PCT/JP2010/003689
(87) International publication number: WO 2010/140360

(57) **Abstract**

The object to be achieved by the present invention is to provide an active energy ray curable-type inkjet recording ink composition that is used for recording on a glass surface and is excellent in adhesiveness to the glass surface and water resistance and alcohol resistance. The active energy ray curable-type inkjet recording ink composition of the present invention at least contains: (b) photopolymerization initiator; 40 to 75 percent by mass of (d) cyclic monofunctional (meth)acrylate; 5 to 20 percent by mass of (e) hydroxyl group-containing (meth)acrylate; and 3 to 10 percent by mass of (c) epoxy group-containing silane coupling agent. The active energy ray curable-type inkjet recording ink composition is used for recording on a glass surface.

## Description

### Technical Field

The present invention relates to an active energy ray curable-type inkjet recording ink composition that is excellent in adhesiveness to a glass surface, suitable for recording on a glass surface, and excellent in water resistance and alcohol resistance.

### Background Art

The problem with inkjet recording onto a glass surface is that an ink composition has difficulty adhering to a glass surface because of glass's low surface energy. What is disclosed in PTL 1 is a glass surface that is anchor-processed before inkjet-recording is performed on the processed surface. However, it has been hoped that an ink composition suitable for direct printing on a glass surface would be offered.

What is disclosed in PTL 2 is the fact that the present inventor et al. have developed an ink composition which is excellent in adhesiveness to a glass surface without the glass being processed in advance. The above ink composition includes, as a main ingredient, a photopolymerizable monomer containing a polar group. Therefore, the problem is that the ink composition is weak in water-alcohol resistance.

There has so far been no inkjet ink that is used for printing on a glass surface, has sufficient adhesiveness, and can endure a process of washing by water or alcohol.

PTL 1: JP-A-2004-34675
PTL 2: JP-A-2010-184996

### Disclosure of the Invention

### Problems to be Solved by the Invention

An object of the present invention is to provide an active energy ray curable-type inkjet recording ink composition that does not require many processes, such as priming or over-coating, at the time of printing on a glass surface, and is excellent in adhesiveness to the glass surface and water and alcohol resistance. Means for Solving the Problems

An active energy ray curable-type inkjet recording ink composition of the present invention contains: (b) photopolymerization initiator and (c) epoxy group-containing silane coupling agent; and at least one type of (d) cyclic monofunctional (meth)acrylate, which is selected from among aromatic hydrocarbon monofunctional (meth)acrylate and alicyclic hydrocarbon monofunctional (meth)acrylate, and (e) hydroxyl group-containing (meth)acrylate as photopolymerizable monomers, wherein the amount of the (d) cyclic monofunctional (meth) acrylate contained is 40 to 75 percent by mass, the amount of (e) hydroxyl group-containing (meth)acrylate contained is 5 to 20 percent by mass, and the amount of the (c) epoxy group-containing silane coupling agent contained is 3 to 10 percent by mass, and the active energy ray curable-type inkjet recording ink composition is used for recording on a glass surface.
It is preferred that the active energy ray curable-type inkjet recording ink composition contain (a) color material.

The preferred (c) epoxy group-containing silane coupling agent is at least of one type, which is selected from among epoxy group-containing silicone alkoxy oligomer, 2-(3, 4-epoxycyclohexyl)ethyltrimethoxysilane, and 3-glycidoxypropyltrimethoxysilane.

The preferred (d) cyclic monofunctional (meth) acrylate is at least of one type, which is selected from among benzyl (meth)acrylate, phenoxyethyl (meth)acrylate, phenoxy polyethylene glycol (meth)acrylate, isobornyl (meth)acrylate, cyclohexyl (meth)acrylate, 3, 3, 5-trimethylcyclohexane (meth)acrylate, 4-t-butylcyclohexyl (meth)acrylate, norbornyl (meth)acrylate, dicyclopentenyl (meth)acrylate, and dicyclopentanyl (meth)acrylate.

The preferred (e) hydroxyl group-containing monofunctional (meth) acrylate is at least of one type, which is selected from among 2-hydroxy-3-phenoxypropyl (meth)acrylate, 4-hydroxybutyl (meth)acrylate and hydroxyl containing aromatic hydrocarbon (meth)acrylate.

It is preferred that the amount of (f) polyfunctional (meth)acrylate contained in the active energy ray curable-type inkjet recording ink composition be less than or equal to 15 percent by mass.

It is preferred that the active energy ray curable-type inkjet recording ink composition contain (g) heterocycle having a ring with five or six members, which is formed by at least one type of heteroatom selected from among nitrogen and oxygen atoms. Moreover, the amount of monofunctional monomer, which includes an ethylenically unsaturated double bond, contained is less than or equal to 25 percent by mass.

### Advantages of the Invention

The active energy ray curable-type inkjet recording ink composition of the present invention is excellent in adhesiveness to a glass surface and water and alcohol resistance.

### Best Mode for Carrying Out the Invention

A photopolymerizable monomer of an ink composition of the present invention includes one type of cyclic monofunctional (meth)acrylate, which is selected from among the following, and hydroxyl containing (meth)acrylate: aromatic hydrocarbon monofunctional (meth)acrylate, and alicyclic hydrocarbon monofunctional (meth)acrylate. Incidentally, monofunctional (meth) acrylate means that one molecule contains one (meth) acrylate group. Multifunctional (meth)acrylate means that one molecule contains two or more (meth)acrylate groups. Moreover, (meth)acrylate means methacrylate or acrylate.

Cyclic monofunctional (meth)acrylate will be described.
Specific examples of aromatic hydrocarbon monofunctional (meth)acrylate are benzyl (meth)acrylate, phenoxyethyl (meth)acrylate, and phenoxy polyethylene glycol (meth)acrylate.

Specific examples of alicyclic hydrocarbon monofunctional (meth)acrylate are isobornyl (meth)acrylate, cyclohexyl (meth)acrylate, 3, 3, 5-trimethylcyclohexane (meth)acrylate, 4-t-butylcyclohexyl (meth)acrylate, norbornyl (meth)acrylate, dicyclopentenyl (meth) acrylate, and dicyclopentanyl (meth)acrylate.

Specific examples of cyclic monofunctional (meth)acrylate that is available on the market are: "Laromer DCPA, dicyclopentenyl acrylate" manufactured by BASF; "Laromer TBCH, 4-t-butylcyclohexyl acrylate" manufactured by BASF; "LIGHT ACRYLATE IBXA, isobornyl acrylate" manufactured by KYOEISHA CHEMICAL; "LIGHT ACRYLATE POA, phenoxy ethyl acrylate" manufactured by KYOEISHA CHEMICAL; "Viscoat 160, benzyl acrylate" manufactured by OSAKA ORGANIC CHEMICAL INDUSTRY; and "FA-513AS, dicyclopentanyl acrylate" manufactured by Hitachi Chemical.

For example, compared with aliphatic monofunctional (meth) acrylate or the like of the same molecular weight, the curing and shrinkage properties of aromatic hydrocarbon ring (meth)acrylate and alicyclic hydrocarbon monofunctional (meth)acrylate are small, contributing to an improvement in adhesiveness to a glass substrate of a coating film. Aromatic hydrocarbon ring (meth)acrylate and alicyclic hydrocarbon monofunctional (meth) acrylate are hydrophobic, thereby leading to an improvement in resistance against the water of the coating film and alcohol, and making it difficult to cause swelling associated with water and alcohol and a decline in adhesiveness. In particular, a monomer having a dicyclopentenyl group has a bulky three-dimensional structure, resulting in a smaller curing and shrinkage ratio as well as a higher glass transition point (Tg) of resultant polymer. As a result, what is obtained is a coating film that is excellent in adhesiveness, water resistance, alcohol resistance and scratch resistance.

The amount of cyclic monofunctional (meth)acrylate contained in an ink composition is 40 percent by mass to 75 percent by mass, or preferably 50 percent by mass to 65 percent by mass. If the amount contained is less than 40 percent by mass, the coating film is likely to have lower levels of alcohol resistance, water resistance and boiling water resistance.

Specific examples of hydroxyl group-containing (meth)acrylate are 2-hydroxy-3-phenoxypropyl (meth)acrylate, 4-hydroxybutyl (meth)acrylate, 2-hydroxyethyl (meth)acrylate, dihydroxypropyl (meth)acrylate, and low-viscosity aromatic monoacrylate oligomer (CN131B, manufactured by Sartomer with a viscosity of 100 mPa · s at 25 degrees Celsius, containing a hydroxyl group).

The use of hydroxyl group-containing (meth)acrylate is targeted at adhesiveness to a glass substrate. The amount of hydroxyl containing (meth)acrylate contained in the ink composition may be 5 percent by mass to 20 percent by mass. If the amount contained is too small, the adhesiveness of the coating film to the glass substrate decreases. If the amount contained is too large, the coating film could easily swell, resulting in a decrease in water resistance and alcohol resistance of the coating film.

The ink composition of the present invention includes, as an essential component, a silane coupling agent containing an epoxy group, as well as the above cyclic monofunctional (meth)acrylate and hydroxyl group-containing (meth)acrylate.

Specific examples of the silane coupling agent containing an epoxy group are: epoxy group-containing silicone alkoxy oligomer, 2-(3, 4-epoxycyclohexyl)ethyltrimethoxysilane, 3-glycidoxypropyltrimethoxysilane, 3-glycidoxypropylmethyldiethoxysilane, and 3-glycidoxypropyltriethoxysilane. Specific examples of the silane coupling agent available on the market are: "X-41-1056" manufactured by Shin-Etsu Chemical; "KBM-303" manufactured by Shin-Etsu Chemical; "KBM-403" manufactured by Shin-Etsu Chemical; "key-402" manufactured by Shin-Etsu Chemical; and "KBE-403" manufactured by Shin-Etsu Chemical. Among the above agents, an oligomer-type silane coupling agent contributes to an improvement in the stability and hardness of the coating film.

In general, the silane coupling agent forms a hydrogen or covalent bond with a hydrophilic group on a glass surface. Therefore, the silane coupling agent is expected to increase adhesion. However, it has been found that in the composition of the present invention, a silane coupling agent containing a radically polymerizable double bond, such as a vinyl group, acryloxy group or methacryloxy group, leads to a decrease in adhesiveness to the glass surface. Detailed reasons for the above are unknown. However, it is considered that the radically polymerizable double bond group in the silane coupling agent might be consumed in the radical polymerization with (meth)acrylates in the ink, and coupling portions exist uniformly in the coating film, not on the glass surface, making it difficult to increase the concentration of hydrogen bonds with silanol groups on the glass surface. Moreover, it is considered that the hydrogen bonds would be weakened after being immersed in water and boiled, causing a decrease in the adhesion of the coating film.

On the other hand, according to the present invention, the silane coupling agent containing an epoxy group can hardly react with (meth)acrylates in the ink composition. Therefore, the coupling portions are not taken into the system, and it is possible to increase the concentration of hydrogen bonds on a glass interface. It is considered that, even when being immersed and boiled, the adhesiveness of the coating film to the glass does not decrease because of sufficient hydrogen bonds.

The amount of the epoxy group-containing silane coupling agent contained in the ink composition is 3 percent by mass to 10 percent by mass. If the amount contained is less than 3 percent by mass, the coating film loses water resistance and boiling water resistance. If the amount contained exceeds 10 percent by mass, the radical polymerization of (meth)acrylates in the ink composition is hampered.

The ink composition of the present invention includes a heterocycle having a ring with five or six members, which is formed by at least one type of heteroatom selected from among nitrogen and oxygen atoms. Moreover, the ink composition can contain a monofunctional monomer (referred to as heterocyclic monomer, hereinafter), which includes an ethylenically unsaturated double bond. Specific examples of the ethylenically unsaturated double bond group in the heterocyclic monomer are a vinyl group and a (meth)acryloyl group. Moreover, specific examples of the heterocycle are a morpholino ring, lactone ring, lactam ring, pyrrolidone ring, and furan ring. Specific examples of the heterocyclic monomer are N-(meth)acryloylmorpholine, N-vinylcaprolactam, tetrahydrofurfurylalcohololigo(meth)acrylate, y-butyrolactone(meth)acrylate, N-vinyl-2-pyrrolidone, and cyclic trimethylolpropane formal acrylate, which is represented by the following formula:

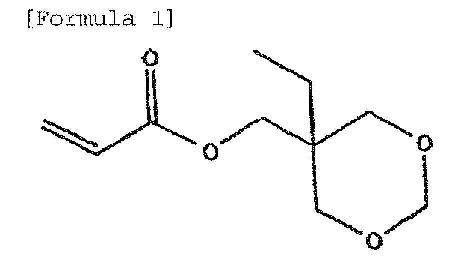

The above components may be used independently or in combination.

Specific examples of the heterocyclic monomer available on the market are: "ACMO, acryloyl morpholine" manufactured by KOHJIN; "V#150D, polymeric ester of tetrahydrofurfuryl alcohol acrylic acid" manufactured by OSAKA ORGANIC CHEMICAL INDUSTRY; "V-CAP, N-vinylcaprolactam" manufactured by ISP; and "SR531, cyclic trimethylolpropane formal acrylate" manufactured by Sartomer.

A monofunctional monomer that includes a heterocycle as a substituted group causes a decrease in the shrinkage ratio of the coating film, as well as an improvement in the curing properties of the ink composition. Moreover, a hydrogen bond associated with a polar group that the monofunctional monomer has leads to an improvement in the adhesiveness of the coating film to a glass substrate. However, the hydrogen bond particularly decreases the coating film's resistance to alcohol. Therefore, the amount of the monofunctional monomer contained in the ink composition is less than or equal to 25 percent by mass.

The ink composition of the present invention may contain multifunctional (meth)acrylate. Specific examples of the multifunctional (meth) acrylate are isocyanuric acid ethylene oxide modified tri- (meth) acrylate, tripropylene glycol di (meth) acrylate, pentaerythritol tri-(meth)acrylate, dipentaerythritol tetra-(meth)acrylate, tricyclodecane dimethanol di(meth)acrylate, and dipropyleneglycol di(meth)acrylate. The above components maybe used independently or in combination. The multifunctional (meth)acrylate helps improve the curing properties of the ink composition and the strength of the coating film. However, compared with the heterocyclic monomer and cyclic monofunctional (meth)acrylate, the multifunctional (meth)acrylate allows the greater shrinkage of the coating film at the time of curing, and inhibits the adhesiveness of the coating film to a glass substrate. Therefore, the amount of the multifunctional (meth)acrylate contained in the ink composition is less than or equal to 15 percent by mass.

A color material that the ink composition of the present invention contains when required is an inorganic or organic pigment, which is typically used in conventional solvent ink compositions. Specific examples of the pigment are carbon black, cadmium red, molybdenum red, chrome yellow, cadmium yellow, titanium oxide, titan yellow, chrome oxide, viridian, titanium cobalt green, ultramarine blue, prussian blue, cobalt blue, diketo-pyrrolo-pyrrole, anthraquinone, benzimidazolone, anthrapyrimidine, azo pigments, phthalocyanine pigments, quinacridone pigments, isoindolinone pigments, dioxazine pigments, threne pigments, perylene pigments, perinone pigments, thioindigo pigments, quinophthalone pigments and metal complex pigments.

As for the volume average particle diameter of a pigment primary particle, the average particle diameter is preferably 50 to 250 nm as a value measured by laser scattering. If the volume average particle diameter of the pigment primary particle is less than 50 nm, the light resistance of the coating film decreases. Meanwhile, if the volume average particle diameter of the pigment primary particle exceeds 50 nm, it becomes difficult to stabilize the dispersion of the pigment, and makes it easier for the pigment to be precipitated. The amount of the pigment contained in the ink composition is 0.5 to 25 percent by mass, preferably 0.5 to 15 percent by mass, or more preferably 1 to 10 percent by mass.

It is preferred that a dispersing agent be a polymeric dispersant. Specific examples of a main chain of the polymeric dispersant are polyester, polyacrylic, polyurethane, polyamine, and polycaprolactone. Specific examples of a side chain of the polymeric dispersant are polar groups, such as an amino group, a carboxyl group, a sulfone group and a hydroxyl group. It is preferred that the polymeric dispersant is a polyester dispersant. Specific examples of the polyester dispersant are: "SOLSPERSE32000," "SOLSPERSE20000," "SOLSPERSE24000," and "SOLSPERSE71000," manufactured by Lubrizol; and "AjisperPB821" and "AjisperPB822" manufactured by Aj inomoto Fine-Techno. For 1 part by mass of the pigment, 0.03 to 5 parts by mass, or preferably 0.05 to 5 parts by mass, of the dispersant are used. The amount of the dispersant used in the ink composition is 0 .1 to 30 percent by mass, or preferably 0.5 to 20 percent by mass.

A photopolymerization initiator will be described. Active energy rays of the present invention indicate energy rays that could induce a polymerization reaction such as radical, cation or anion, including electron rays, ultraviolet rays and infrared rays.

For the photopolymerization initiator, an acylphosphine compound, as well as α-hydroxyketone and/or α-aminoalkylphenone, is used. Specific examples of acylphosphineoxide are: bis(2, 4, 6-trimethylbenzoyl)-phenyl-phosphineoxide (IRGACURE 819, manufactured by Ciba Specialty Chemicals); bis(2, 6-dimethoxybenzoyl)-2, 4, 4-trimethyl-pentylphenylphosphineoxide; 2, 4, 6-trimethylbenzoyl-diphenyl-phosphineoxide (Darocur TPO: manufactured by Ciba Specialty Chemicals: Lucirin TPO: manufactured by BASF).

Specific examples of α-hydroxyketone are: 2-hydroxy-1-{4-[4-(2-hydroxy-2-methyl-propionyl)-benzyl]-pheny }-2-methyl-propan-1-one (IRGACURE 127, manufactured by Ciba Specialty Chemicals); 2-hydroxy-4'-hydroxyethoxy-2-methylpropiophenone (IRGACURE 2959, manufactured by Ciba Specialty Chemicals); and oligo[2-hydroxy-2-methyl-1-{4-(1-methylvinyl)phenyl} propanone] (n=2) (Esacure One, manufactured by Lambert).

Specific examples of α-aminoalkylphenone are: 2-benzyl-2-dimethylamino-1-(4-morpholinophenyl)-butanone-l (IRGACURE 369, manufactured by Ciba Specialty Chemicals); and 4, 4'-bisdimethylaminobenzophenone (EAB-SS, manufactured by Daido Kasei).

As for Lucirin TPO and IRGACURE 127, the inhibition of polymerization is rarely caused by oxygen. Therefore, Lucirin TPO and IRGACURE 127 are effective especially in the curing properties of a thin film formed by inkjet. Lucirin TPO, IRGACURE 2959 and IRGACURE 369 are excellent in internal curing properties, and are therefore effective especially in the curing of a thick film. In particular, Lucirin TPO reacts to an active energy ray in a highly sensitive manner. Therefore, the amount of Lucirin TPO contained in the ink composition is 3 to 10 percent by mass, or preferably 4 to 8 percent by mass. The use of an acylphosphine compound in combination with α-hydroxyketone and α-aminoalkylphenone helps to improve the curing properties of thin and thick films, as well as the sensitivity for an active energy ray, and reduce the time required for curing. The total amount of the acylphosphine compound, α-hydroxyketone and α-aminoalkylphenon in the ink composition is 8 to 15 percent by mass, or preferably 8 to 12 percent by mass. If the total amount is out of the above ranges, the curing properties of the coating film become poorer. Other kinds of photopolymerization initiator may be added as long as the added initiators do not inhibit the above-described process.

The active energy ray curable-type ink composition of the present invention may contain plasticizers, surface conditioners, such as "Tegorad2300, manufactured by TEGO Chemie," ultraviolet inhibitors, light stabilizers, oxidation inhibitors and other additive agents.

A preferred method of preparing the ink composition of the present invention, which is excellent in stability, is as follows: a pigment is, together with a monomer and a pigment dispersant, well dispersed by a typical disperser such as a sand mill, and a concentrated liquid (mill base) having a high concentration of the pigment is created in advance; the mill base is then diluted with remaining monomers, and other remaining components are added. The inkjet ink of the present invention is filtered by a filter with a pore diameter of 3 µm or less, or more preferably of 1 µm or less.

It is preferred that the ink composition of the present invention have a viscosity of 5 to 20 mPa · s at 40 degrees Celsius. If the viscosity is less than 5 mPa · s, there is a decrease in the followability of the discharging of the ink at a high-frequency head. Meanwhile, if the viscosity goes above 20 mPa · s, there is a decrease in the discharging of the ink even when a mechanism for reducing the viscosity resulting from heating is placed into the head. Therefore, the discharging of the ink becomes unstable, and no ink is discharged as a result.

The ink composition of the present invention is supplied to a printer head of an inkjet recording-type printer, and is discharged onto the substrate from the printer head. Then, active energy rays, such as ultraviolet rays or electron rays, are applied thereto, thereby causing the composition on a printing medium to become cured immediately.

Specific examples of a light source for ultraviolet rays are a high-pressure mercury lamp, a metal halide lamp, a low-pressure mercury lamp, an extra-high pressure mercury lamp, an ultraviolet laser, an LED lamp, and sunlight. If the inkjet ink of the present invention is cured by electron rays, electron rays with an energy of 300 eV or less are typically applied. However, the inkjet ink of the present invention can become immediately cured with an exposure dose of 1 to 5 Mrad.

The printing substrate to which the ink composition of the present invention is applied is a glass substrate. Specific examples of the glass substrate are "FL3" manufactured by ASAHI GLASS; and "#1737" manufactured by Corning. The ink composition of the present invention demonstrates excellent adhesiveness to the glass substrate, as made clear by adhesion tests described bellow.

The following explains the present invention with concrete examples. However, the present invention is not limited to the examples. Incidentally, in the examples, "parts" denote "parts by mass."

### Examples

### Examples 1 to 12 and Comparative Examples 1 to 13

The polymeric dispersant ("SOLSPERSE24000GR," manufactured by Lubrizol, Japan) was dissolved in an appropriate amount of "Laromer TBCH, 4-t-butylcyclohexyl acrylate." Then, a cyan pigment (phthalocyanine pigment, manufactured by Toyo Ink Mfg) was added thereto, and was dispersed by a paint shaker in such a way that the average particle diameter thereof was less than or equal to 250 nm. In this manner, the mill bases shown in the following Tables 1 to 6 were created. The average particle diameter of the cyan pigment was measured by "LB-550," manufactured by HOLIBA.

Ingredients other than the above mill bases and the silane coupling agent were mixed, and were heated at 50 degrees Celsius and stirred for one hour. After it was confirmed that everything became dissolved and the ingredients returned to room temperatures, the mill bases obtained by the above process and the silane coupling agent were sequentially added thereto, and were stirred for 10 minutes. Then, the ingredients were filtered by a membrane filter. In this manner, each of the inks of Examples and Comparative Examples was produced.

The inks were discharged from an inkjet discharging device (Inkjet head "KM-512MH," manufactured by KONICA MINOLTA) onto a glass substrate (FL3, manufactured by ASAHI GLASS) so that the average film thickness was 10 µm. Immediately after that, ultraviolet rays of 500 mJ/cm² in cumulative luminous energy were applied thereto by MAN85AL-F, which was manufactured by GS YUASA. As a result, the cured coating films were obtained. The following evaluations were made on the glass plates, which were obtained after the coating films were baked for 30 minutes in a constant temperature bath at 200 degrees Celsius.

### Adhesiveness

### (1) Initial adhesiveness

A cured coating film was cross-cut at intervals of 1 mm into 100 pieces, to which cellophane tapes were attached and sufficiently bonded. Then, after the cellophane tapes were removed at 90 degrees, the adhesion of the coating film to the substrate was judged based on the following criteria:

| | |
|---|---|
| 5B: | Not removed |
| 4B: | Less than 5% removed |
| 3B: | 5% or more, but less than 15% removed |
| 2B: | 15% or more, but less than 35% removed |
| 1B: | 35% or more, but less than 65% removed |
| 0B: | 65% or more removed |

### (2) Water resistance

A coating film was cross-cut at intervals of 1 mm into 100 glass plates, which were then put into a constant temperature water bath with a temperature of 25 degrees Celsius and immersed therein for one hour. After that, the glass plates were taken out, and the adhesion of the coating film to the substrate was evaluated in the same way as that of (1).

### (3) Boiling water resistance

A coating film was cross-cut at intervals of 1 mm into 100 glass plates, which were then put into a constant temperature water bath with a temperature of 100 degrees Celsius and boiled therein for one hour. After that, the glass plates were taken out, and the adhesion of the coating film to the substrate was evaluated in the same way as that of (1).

### (4) Alcohol resistance

A coating film was rubbed 20 times with a cotton swab containing IPA (isopropanol). The state of the coating film was judged based on the following criteria:
A: No change
b: Decreased luster of the coating film, or the peeling off of the coating film

The results are shown in the following Tables 1 to 6.

**[Table 1]**

| | Example 1 | Example 2 | Example 3 | Comp. Ex. 1 | Comp. Ex. 2 |
|---|---|---|---|---|---|
| Mill base | | | | | |
| Cyan pigment ¹⁾ | 2.64 | 2.64 | 2.64 | 2.64 | 2.64 |
| 4-t-butylcyclohexyl acrylate ²⁾ | 18.44 | 18.44 | 18.44 | 18.44 | 18.44 |
| SOLSPERSE24000GR ³⁾ | 0.92 | 0.92 | 0.92 | 0.92 | 0.92 |
| Coupling agent | | | | | |
| Epoxy group-containing silicone alkoxy oligomer ⁴⁾ | 5 | - | - | - | - |
| 2-(3, 4 - epoxycyclohexyl)ethyltrimethoxysilane⁵⁾ | - | 5 | - | - | - |
| 3-glycidoxypropyltrimethoxysilane ⁶⁾ | - | - | 5 | - | - |
| Vinyltriethoxysilane ⁷⁾ | - | - | - | 5 | 10 |
| 3-methacryloxypropyltrimethoxysilane ⁸⁾ | - | - | - | - | - |
| 3-acryloxypropylmethoxysilane ⁹⁾ | - | - | - | - | - |
| Mercapto group-containing silicone alkoxy oligomer ¹⁰⁾ | - | - | - | - | - |
| Other components | | | | | |
| Dicyclopentenyl acrylate ¹¹⁾ | 46 | 46 | 46 | 46 | 41 |
| Hydroxyl group-containing aromatic monoacrylate ¹²⁾ | 10 | 10 | 10 | 10 | 10 |
| Dipropyleneglycol diacrylate ¹³⁾ | 5 | 5 | 5 | 5 | 5 |
| Lucirin TPO ¹⁴⁾ | 4 | 4 | 4 | 4 | 4 |
| IRGACCRE 369 ¹⁵⁾ | 4 | 4 | 4 | 4 | 4 |
| Esacure One ¹⁶⁾ | 4 | 4 | 4 | 4 | 4 |
| Tegorad-2300 ¹⁷⁾ | 0.2 | 0.2 | 0.2 | 0.2 | 0.2 |
| Coating film evaluation | | | | | |
| Initial adhesiveness | 5B | 5B | 5B | 5B | 5B |
| Water resistance | 5B | 5B | 5B | 5B | 5B |
| Boiling water resistance | 58 | 5B | 5B | 0B | 0B |
| Alcohol resistance | A | A | A | A | A |

| | | | | | |
|---|---|---|---|---|---|
| 1) "Phthalocyanine pigment," manufactured by Toyo Ink Mfg 2) "Laromer TBCH," manufactured by BASF 3) "Dispersant," manufactured by Lubrizol, Japan 4) "X-41-1056," manufactured by Shin-Etsu Chemical 5) "KBM-303," manufactured by Shin-Etsu Chemical 6) "KBM-403," manufactured by Shin-Etsu Chemical 7) "KBM-1003," manufactured by Shin-Etsu Chemical 8) "KBM-503," manufactured by Shin-Etsu Chemical 9) "KBM-5103," manufactured by Shin-Etsu Chemical 10) "X-41-1805," manufactured by Shin-Etsu Chemical 11) "Laromer DCPA," manufactured by BASF 12) "CN131B," manufactured by Sartomer 13) "SR508," manufactured by Sartomer 14) Photopolymerization initiator, manufactured by BASF 15) Photopolymerization initiator, manufactured by Ciba, Japan 16) Photopolymerization initiator, manufactured by Lambert 17) Surface conditioner, manufactured by TEGO Chemie 2) and 11) were cyclic monofunctional (meth)acrylates; 4) to 6) were silane coupling agents containing an epoxy group; 7) to 10) were silane coupling agents not containing an epoxy group; 12) was hydroxyl group-containing (meth)acrylate; and 13) was polyfunctional (meth)acrylate. | | | | | |

**[Table 2]**

| | Comp. Ex. 3 | Comp. Ex. 4 | Comp. Ex. 5 | Comp. Ex. 6 |
|---|---|---|---|---|
| Mill base | | | | |
| Cyan pigment ¹⁾ | 2.64 | 2.64 | 2.64 | 2.64 |
| 4-t-butylcyclohexyl acrylate ²⁾ | 18.44 | 18.44 | 18.44 | 18.44 |
| SOLSPERSS24000GR ³⁾ | 0.92 | 0.92 | 0.92 | 0.92 |
| Coupling agent | | | | |
| Epoxy group-containing silicone alkoxy oligomer, ⁴⁾ | - | - | - | - |
| 2-(3, 4-epoxycyclohexyl)ethyltrimethoxysilane⁵⁾ | - | - | - | - |
| 3-glycidoxypropyltrimethoxysilane ⁶⁾ | - | - | - | - |
| Vinyltriethoxysilane ⁷⁾ | - | - | - | - |
| 3-methacryloxypropyltrimethoxysilane ⁸⁾ | 5 | - | - | - |
| 3-acryloxypropylmethoxysilane ⁹⁾ | - | 5 | 10 | - |
| Mercapto group-containing silicone alkoxy oligomer ¹⁰⁾ | - | - | - | 5 |
| Other components | | | | |
| Dicyclopentenyl acrylate ¹¹⁾ | 46 | 46 | 41 | 46 |
| Hydroxyl group-containing aromatic monoacrylate ¹²⁾ | 10 | 10 | 10 | 10 |
| Dipropyleneglycol diacrylate ¹³⁾ | 5 | 5 | 5 | 5 |
| Lucirin TPO ¹⁴⁾ | 4 | 4 | 4 | 4 |
| IRGACURE 369 ¹⁵⁾ | 4 | 4 | 4 | 4 |
| Esacure One ¹⁶⁾ | 4 | 4 | 4 | 4 |
| Tegorad-2300 ¹⁷⁾ | 0.2 | 0.2 | 0.2 | 0.2 |
| Coating film evaluation | | | | |
| Initial adhesiveness | 5B | 5B | 5B | Not measured because of incompatibility |
| Water resistance | 0B | 0B | 0B | |
| Boiling water resistance | 0B | 0B | 0B | |
| Alcohol resistance | A | A | A | |

Incidentally, in Table 2, the same reference symbols as those in Table 1 represent the same contents.

**[Table 3]**

| | Example 4 | Example 5 | Example 6 | Example 7 |
|---|---|---|---|---|
| Mill base | | | | |
| Cyan pigment ¹⁾ | 2.64 | 2.64 | 2.64 | 2.64 |
| 4-t-butylcyclohexyl acrylate ²⁾ | 18.44 | 18.44 | 18.44 | 18,44 |
| SOLSPERSE24000GR ³⁾ | 0.92 | 0.92 | 0.92 | 0.92 |
| Coupling agent | | | | |
| Epoxy group-containing silicone alkoxy oligomer ⁴⁾ | 5 | 5 | 5 | 5 |
| Other components | | | | |
| Dicyclopentenyl acrylate ¹¹⁾ | 46 | - | - | - |
| 4-t-butylcyclohexyl acrylate ²⁾ | - | 46 | - | - |
| Isobornyl acrylate ¹⁸⁾ | - | - | 46 | - |
| Phenoxy ethyl acrylate ¹⁹⁾ | - | - | - | 46 |
| Hydroxy group-containing aromatic monoacrylate ¹²⁾ | 10 | 10 | 10 | 10 |
| Dipropyleneglycol diacrylate ¹³⁾ | 5 | 5 | 5 | 5 |
| Lucirin TPO ¹⁴⁾ | 4 | 4 | 4 | 4 |
| IRGACURE 369 ¹⁵⁾ | 4 | 4 | 4 | 4 |
| Esacure One ¹⁶⁾ | 4 | 4 | 4 | 4 |
| Tegorad-2300 ¹⁷⁾ | 0.2 | 0.2 | 0.2 | 0.2 |
| Coating film evaluation | | | | |
| Initial adhesiveness | 5B | 5B | 5B | 5B |
| Water resistance | 5B | 5B | 5B | 5B |
| Boiling water resistance | 5B | 5B | 5B | 5B |
| Alcohol resistance | A | A | A | A |

Incidentally, in the table, the same reference symbols as those in Table 1 represent the same contents.
18) LIGHT ACRYLATE IB-XA, manufactured by KYOEISHA CHEMICAL
19) LIGHT ACRYLATE POA, manufactured by KYOEISHA CHEMICAL
18) and 19) were cyclic monofunctional (meth)acrylate.

**[Table 4]**

| | Comparative Example 7 | Comparative Example 8 | Comparative Example 9 |
|---|---|---|---|
| Mill base | | | |
| Cyan pigment ¹⁾ | 2.64 | 2.64 | 2.64 |
| 4-t-butylcyclohexyl acrylate ²⁾ | 18.44 | 18.44 | 18.44 |
| SOLSPERSE24000GR ³⁾ | 0.92 | 0.92 | 0.92 |
| Coupling agent | | | |
| Epoxy group-containing silicone alkoxy oligomer ⁴⁾ | 5 | 5 | 5 |
| Other components | | | |
| Hydroxyl group-containing aromatic moncacrylate ¹²⁾ | 10 | 10 | 10 |
| acryloyl morpholine ²⁰⁾ | 46 | - | - |
| polymeric ester of tetrahydrofurfuryl alcohol acrylic acid ²¹⁾ | - | 46 | - |
| N-vinylcaprolactam ²²⁾ | - | - | 46 |
| Dipropyleneglycol diacrylate ¹³⁾ | 5 | 5 | 5 |
| Lucirin TPO ¹⁴⁾ | 4 | 4 | 4 |
| IRGACURE 369 ¹⁵⁾ | 4 | 4 | 4 |
| Esacure One ¹⁶⁾ | 4 | 4 | 4 |
| Tegorad-2300 ¹⁷⁾ | 0.2 | 0.2 | 0.2 |
| Coating film evaluation | | | |
| Initial adhesiveness | 5B | 5B | 5B |
| Water resistance | 5B | 5B | 3B |
| Boiling water resistance | 58 | 3B | 0B |
| Alcohol resistance | B | B | B |

Incidentally, in the table, the same reference symbols as those in Tables 1 and 3 represent the same contents.
20) ACMO, manufactured by KOHJIN
21) V#150D, manufactured by OSAKA ORGANIC CHEMICAL INDUSTRY
22) V-CAP, manufactured by ISP
20) to 22) were heterocyclic monomers.

**[Table 5]**

| | Example 8 | Example 9 | Example 10 | Example 11 | Example 12 |
|---|---|---|---|---|---|
| Mill base | | | | | |
| Cyan pigment ¹⁾ | 2.64 | 2.64 | 2.64 | 2.64 | 2.64 |
| 4-t-butylcyclohexyl acrylate ²⁾ | 18.44 | 18.44 | 18.44 | 18.44 | 18.44 |
| SOLSPERSE24000GR ³⁾ | 0.92 | 0.92 | 0.92 | 0.92 | 0.92 |
| Coupling agent | | | | | |
| Epoxy group-containing silicone alkoxy oligomer ⁴⁾ | 3 | 5 | 5 | 10 | 5 |
| Other components | | | | | |
| Dicyclopentenyl acrylate ¹¹⁾ | 46 | 36 | 26 | 46 | 56 |
| Hydroxyl group-containing aromatic monoacrylate ¹²⁾ | 12 | 20 | 10 | 5 | 5 |
| acryloyl morpholine ²⁰⁾ | - | - | 20 | - | - |
| Dipropyleneglycol diacrylate ¹³⁾ | 5 | 5 | 5 | 5 | - |
| Lucirin TPO ¹⁴⁾ | 4 | 4 | 4 | 4 | 4 |
| IRGACURE 369 ¹⁵⁾ | 4 | 4 | 4 | 4 | 4 |
| Esacure One ¹⁶⁾ | 4 | 4 | 4 | 4 | 4 |
| Tegorad-2300 ¹⁷⁾ | 0.2 | 0.2 | 0.2 | 0.2 | 0.2 |
| Coating film evaluation | | | | | |
| Initial adhesiveness | 5B | 5B | 5B | 5B | 5B |
| Water resistance | 5B | 5B | 5B | 5B | 5B |
| Boiling water resistance | 5B | 58 | 5B | 5B | 5B |
| Alcohol resistance | A | A | A | A | A |

Incidentally, in the table, the same reference symbols as those in Tables 1 and 3 represent the same contents.

**[Table 6]**

| | Comp. Example 10 | Comp. Example 11 | Comp. Example 12 | Comp. Example 13 |
|---|---|---|---|---|
| Mill base | | | | |
| Cyan pigment ¹⁾ | 2.64 | 2.64 | 2.64 | 2.64 |
| 4-t-butylcyclohexyl acrylate ²⁾ | 18.44 | 18.44 | 18.44 | 18.44 |
| SOLSFERSE24000GR ³⁾ | 0.92 | 0.92 | 0.92 | 0.92 |
| Coupling agent | | | | |
| Epoxy group-containing silicone alkoxy oligomer ⁴⁾ | 5 | 5 | 5 | - |
| Other components | | | | |
| Dicyclopentenyl acrylate ¹¹⁾ | 56 | 31 | 16 | 49 |
| Hydroxyl group-containing aromatic monoacrylate ¹²⁾ | - | 10 | 10 | 12 |
| acryloyl morpholine ²⁰⁾ | - | - | 30 | - |
| Dipropyleneglycol diacrylate ¹³⁾ | 5 | 20 | 5 | 5 |
| Lucirin TPO ¹⁴⁾ | 4 | 4 | 4 | 4 |
| IRGACURE 369 ¹⁵⁾ | 4 | 4 | 4 | 4 |
| Esacure One ¹⁶⁾ | 4 | 4 | 4 | 4 |
| Tegorad-2300 ¹⁷⁾ | 0.2 | 0.2 | 0.2 | 0.2 |
| Coating film revaluation | | | | |
| Initial adhesiveness | 5B | 5B | 5B | 5B |
| Water resistance | 4B | 0B | 5B | 0B |
| Boiling water resistance | 0B | 0B | 5B | 0B |
| Alcohol resistance | A | A | B | A |

Incidentally, in the table, the same reference symbols as those in Tables 1 and 3 represent the same contents.

### Example 13

Except that the mill bases were not used, similar operations to the above were carried out, and a coating film was evaluated.

**[Table 7]**

| | Example 13 |
|---|---|
| Coupling agent | |
| Epoxy group-containing silicone alkoxy oligomer ⁴⁾ | 5 |
| Other components | |
| Dicyclopentenyl acrylate ¹¹⁾ | 36 |
| Hydroxyl group-containing aromatic monoacrylate ¹²⁾ | 20 |
| Phenoxy ethyl acrylate ¹⁹⁾ | 31 |
| Lucirin TPO ¹⁴⁾ 4 | |
| Esacure One ¹⁶⁾ | 4 |
| Tegnrad-2300 ¹⁷⁾ | 0.2 |
| Coating film evaluation | |
| Initial adhesiveness | 5B |
| Water resistance | 5B |
| Boiling water resistance | 5B |
| Alcohol resistance | A |

Incidentally, in the table, the same reference symbols as those in Tables 1 and 3 represent the same contents.

### Industrial Applicability

The active energy ray curable-type inkjet recording ink composition of the present invention is excellent in adhesiveness to a glass surface and water and alcohol resistance.

## Claims

1. An active energy ray curable-type inkjet recording ink composition, comprising:
(b) photopolymerization initiator and (c) epoxy group-containing silane coupling agent; and
at least one type of (d) cyclic monofunctional (meth)acrylate, which is selected from among aromatic hydrocarbon monofunctional (meth)acrylate and alicyclic hydrocarbon monofunctional (meth)acrylate, and (e) hydroxyl group-containing (meth)acrylate as photopolymerizable monomers, **characterized in that**
the amount of the (d) cyclic monofunctional (meth)acrylate contained is 40 to 75 percent by mass, the amount of (e) hydroxyl group-containing (meth)acrylate contained is 5 to 20 percent by mass, and the amount of the (c) epoxy group-containing silane coupling agent contained is 3 to 10 percent by mass, and
the active energy ray curable-type inkjet recording ink composition is used for recording on a glass surface.

2. The active energy ray curable-type inkjet recording ink composition according to claim 1, **characterized by** further comprising
(a) color material.

3. The active energy ray curable-type inkjet recording ink composition according to claim 1 or 2, **characterized in that**
(c) epoxy group-containing silane coupling agent is at least of one type, which is selected from among epoxy group-containing silicone alkoxy oligomer, 2-(3, 4-epoxycyclohexyl)ethyltrimethoxysilane, and 3-glycidoxypropyltrimethoxysilane.

4. The active energy ray curable-type inkjet recording ink composition according to claim 1, **characterized in that**
(d) cyclic monofunctional (meth) acrylate is at least of one type, which is selected from among benzyl (meth)acrylate, phenoxyethyl (meth)acrylate, phenoxy polyethylene glycol (meth)acrylate, isobornyl (meth)acrylate, cyclohexyl (meth)acrylate, 3, 3, 5-trimethylcyclohexane (meth)acrylate, 4-t-butylcyclohexyl (meth)acrylate, norbornyl (meth)acrylate, dicyclopentenyl (meth)acrylate, and dicyclopentanyl (meth) acrylate.

5. The active energy ray curable-type inkjet recording ink composition according to claim 1, **characterized in that**
(e) hydroxyl group-containing monofunctional (meth) acrylate is at least of one type, which is selected from among 2-hydroxy-3-phenoxypropyl (meth)acrylate, 4-hydroxybutyl (meth)acrylate and hydroxyl containing aromatic hydrocarbon (meth)acrylate.

6. The active energy ray curable-type inkjet recording ink composition according to claim 1, **characterized in that**
the amount of (f) polyfunctional (meth)acrylate contained is less than or equal to 15 percent by mass.

7. The active energy ray curable-type inkjet recording ink composition according to claim 1, further comprising
(g) heterocycle having a ring with five or six members, which is formed by at least one type of heteroatom selected from among nitrogen and oxygen atoms, **characterized in that**
the amount of monofunctional monomer, which includes an ethylenically unsaturated double bond, contained is less than or equal to 25 percent by mass.
